# FASCICULE DE BREVET EUROPEEN

(11) **EP 2 907 321 B1**
(45) Date de publication et mention de la délivrance du brevet: **07.12.2016**
(21) Numéro de dépôt: 13805426.7
(22) Date de dépôt: 09.10.2013
(51) Int. Cl.: H04Q 9/00, G01K 11/26, G01N 29/24, G01M 15/05

(54) **SYSTÈME DEDIÉ À LA SURVEILLANCE DES PARAMÈTRES PHYSIQUES ET/OU ANALOGIQUES DES PIECES D'UN MOTEUR**
SYSTEM ZUR ÜBERWACHUNG DER PHYSIKALISCHEN UND/ODER ANALOGEN PARAMETER VON TEILEN EINES MOTORS
SYSTEM DEDICATED TO MONITORING THE PHYSICAL AND/OR ANALOGUE PARAMETERS OF THE PARTS OF AN ENGINE

(30) Priorité: 10.10.2012 FR 1202706
(43) Date de publication de la demande: 19.08.2015
(73) Titulaire: Contrôle Mesure Régulation, 13013 Marseille (FR)
(72) Inventeur: FOUACHE, Pascal, F-13590 Meyreuil (FR)
(74) Mandataire: Roman, Alexis
(86) Numéro de dépôt international: PCT/FR2013/052409
(87) Numéro de publication internationale: WO 2014/057219

(56) Documents cités:
- EP-A1- 2 422 900
- WO-A1-00/62029
- WO-A1-97/28589
- DE-A1- 10 325 667

## Description

### Domaine technique de l'invention.

L'invention a pour objet un système dédié à la surveillance des paramètres physiques et/ou analogiques des pièces d'un moteur.

L'invention concerne les techniques de mesures et de contrôle de paramètres variés sur des pièces mécaniques mobiles et/ou inaccessibles d'un moteur, destinés en particulier à la surveillance et à la sécurité des moteurs alternatifs à combustion interne.

### État de la technique.

Il est primordial d'assurer le contrôle des paramètres significatifs de l'intégrité et du bon fonctionnement des organes et composants du moteur. Pour cela, la méthode habituelle consiste à effectuer des mesures directement sur ces composants. En cas de variation anormale d'un facteur comme la température, la pression ou encore la contrainte, il est alors possible de stopper le système avant qu'un incident ne survienne et que le moteur cesse de fonctionner. C'est par exemple le cas lorsqu'une pièce est insuffisamment lubrifiée ou soumise à une température trop élevée. Selon l'utilisation qui est faite du matériel, les conséquences sanitaires ou économiques peuvent être très importantes. Permettre un arrêt anticipé et automatique du système si un paramètre anormal est constaté est un avantage majeur. L'efficacité d'un tel dispositif est donc en grande partie tributaire de sa rapidité.

L'état de la technique décrit plusieurs systèmes permettant d'effectuer un tel contrôle.

On connait par exemple par le document brevet EP 0.051.035 (CMR), un dispositif de contrôle de température des pièces mobiles internes d'un moteur par l'intermédiaire d'un transmetteur-récepteur formé de deux bobines fixes. Ce transmetteur-récepteur émet un signal porté par un circuit magnétique résonnant à une fréquence déterminée. Ce signal est détecté par un capteur (formé par une bobine mobile) placé sur une pièce en mouvement, et relié à une thermistance qui réagit à la température de la pièce en influent sur la sensibilité dudit capteur, lequel détecte alors de manière plus ou moins importante le signal qui lui est envoyé par le transmetteur-récepteur. Le signal résonnant est mesuré par le transmetteur-récepteur et est interprété par un dispositif électronique en unité de température.

Dans ce dispositif, plusieurs aspects contraignant sont à relever. Tout d'abord, c'est la thermistance qui définit la réponse du capteur suivant des variations non-linéaires, ce qui est gênant puisque selon la qualité et la précision de cet élément, les mesures peuvent être faussées sur de grandes plages de variation. De plus, le transmetteur récepteur génère un champ magnétique par lequel les ondes circulent. Or ce champ magnétique n'est pas entièrement détecté par le capteur, ce qui entraîne la perte d'une partie des ondes émises et reçues par le transmetteur/récepteur. La précision de la mesure dépend donc de la qualité de la bobine du système et des calibrations fastidieuses à réaliser pour chaque capteur en usine. Ensuite, la distance maximale de lecture séparant le transmetteur/récepteur du capteur n'est que de l'ordre de 2 mm, ce qui est assez faible et peut poser problème pour certaines pièces en mouvement, par exemple par rapport aux jeux de fonctionnement qui peuvent être du même ordre de grandeur. Ces problèmes ne permettent pas de répondre de manière satisfaisante aux attentes des utilisateurs.

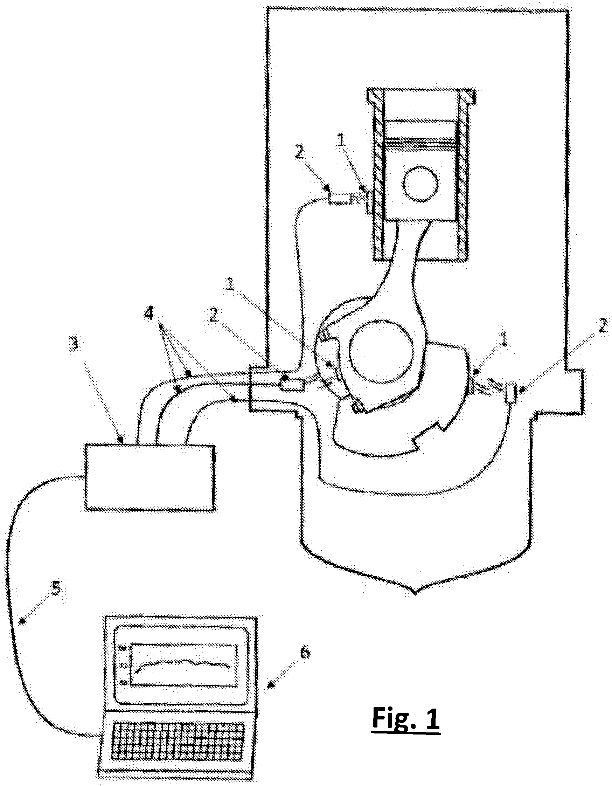

On connait également par le document brevet WO 00/62029 (SENSIT), un système basé sur l'utilisation de filtres à ondes acoustiques de surface (connue sous l'acronyme anglais Surface Acoustic Wave ou SAW) qui consiste à émettre des ondes électromagnétiques via une antenne stationnaire, qui sont convertis en ondes mécaniques dans un dispositif constitué de cristal piézoélectrique ou de céramique. Cette onde est délayée tandis qu'elle se propage à travers le composant avant d'être reconvertie en un signal électrique par des électrodes. Ce signal réponse est reconfiguré pour produire une impulsion analogique-réponse finie à travers un filtre. Ce procédé est basé sur le principe des lignes retards. Le retard de l'onde réfléchie dépend de la température. Dans ce système qui est illustré sur la figure 1, une unité électronique de contrôle unique 3 interroge, via des antennes 2, plusieurs capteurs SAW 1 placés dans chaque compartiment moteur, sur les pièces dont il faut mesurer la température. Les informations sont communiquées par l'unité électronique de contrôle 3 à un matériel de supervision 6 via un bus numérique 5.

Ce système présente plusieurs inconvénients. D'abord, c'est un système qui interroge chaque capteur SAW 1 via une seule et même unité électronique de contrôle 3. Pour cela, il utilise le multiplexage d'antennes 2, méthode permettant d'interroger chaque capteur 1 de manière séquentielle. Or, cette méthode est contraignante puisqu'elle augmente considérablement le temps d'attente entre chaque opération d'interrogation des capteurs 1. En effet, dans ce système, l'unité de contrôle unique 3 interroge successivement les capteurs 1 en envoyant tout d'abord un signal via des câbles coaxiaux 4 reliés aux antennes 2. Celles-ci communiquent avec les capteurs SAW 1. Le signal réponse suit le cheminement inverse. La réception et le traitement des multiples signaux reçus par l'unité de contrôle électronique 3 augmentent la durée de l'analyse. De plus, l'environnement métallique du moteur a pour effet de conduire à la perte d'une partie de ces signaux et donc de réduire l'efficacité des mesures effectuées. En outre, le processus d'interrogation des capteurs SAW 1 requiert que chacun dispose d'une antenne 2 qui lui est dédiée dans le compartiment moteur. Chaque communication entre l'antenne 2 et son capteur SAW 1 s'effectue par l'intermédiaire d'une seule et même fréquence pour toutes les antennes 2. L'usage de cette fréquence unique impose donc des interrogations séquentielles de chaque capteur 1 pour éviter les interférences entre les réponses de capteurs proches.

L'un des avantages de ce système par rapports aux autres systèmes connus de l'art antérieur, est la plus grande distance de lecture des capteurs SAW 1 par les antennes 2, laquelle distance est portée jusqu'à 5 cm. Mais cette distance reste encore insuffisante pour affranchir l'utilisateur des contraintes d'installation à l'intérieur du moteur. Par ailleurs, le système nécessite que l'unité de contrôle 3 soit reliée aux antennes 2 par autant de câbles coaxiaux 4 et impose donc des contraintes d'espace et de câblage très gênantes à l'extérieur du moteur.

Les documents brevets EP 2.422.900 (SMS CONCAST) et US 6.239.723 (SIEMENS) divulguent des systèmes permettant d'interroger des capteurs SAW, disposés respectivement dans une lingotière et dans une armoire électrique. Ces capteurs SAW sont disposés sur des pièces fixes, non mobiles, faciles d'accès, et dans un environnement bien moins contraignant que celui d'un moteur.

Face à cet état des choses, l'objectif principal de l'invention est de remédier aux inconvénients précités, et notamment d'améliorer les capacités de mesure des pièces mobiles difficiles d'accès.

Un autre objectif de l'invention est d'obtenir une analyse plus rapide et plus précise que celles obtenues avec les systèmes de l'art antérieur, évitant les contraintes imposées par la méthode de multiplexage enseignée dans le document brevet WO 00/62029 (SENSIT) précité.

L'invention a également pour objectif de proposer un système de surveillance permettant de réduire les contraintes d'espace et de câblage par rapport à celles imposées dans le système du document brevet WO 00/62029 (SENSIT) précité.

L'invention a encore pour objectif d'améliorer les performances vis-à-vis des problématiques liées à l'environnement métallique du carter du moteur.

### Divulgation de l'invention.

La solution proposée par l'invention est un système de surveillance de paramètres physiques et/ou analogiques relatifs à des pièces d'un moteur, ledit système comprenant au moins une unité électronique de contrôle configurée pour interroger, par l'intermédiaire d'au moins une antenne, un capteur à ondes acoustiques de surface (ou capteur SAW) situé sur une desdites pièces.

Ce système est remarquable en ce que :
- le moteur est compartimenté, chaque compartiment comportant plusieurs pièces mobiles dont des paramètres physiques et/ou analogiques doivent être surveillés,
- chacune de ces pièces à surveiller est pourvue d'un capteur à ondes acoustiques de surface, ces capteurs ayant chacun une fréquence de résonance distincte qui leur est propre,
- une antenne est installée à l'intérieur de chacun des compartiments, chacune de ces antennes étant reliée, seule ou par paire, à une unité électronique de contrôle,
- chaque antenne est commandée par l'unité électronique de contrôle à laquelle elle est reliée, pour émettre simultanément plusieurs fréquences distinctes proches des fréquences de résonance des capteurs qui sont situés dans le compartiment moteur de ladite antenne, de manière à communiquer simultanément avec tous ces capteurs.

Dans chaque compartiment, une seule antenne est maintenant capable d'interroger simultanément tous les capteurs qui y sont installés. Les capacités de mesures sont donc non seulement décuplées, mais l'analyse des paramètres devient plus rapide et plus précise que celles obtenues avec les systèmes de l'art antérieur en particulier celle décrite dans le document brevet WO 00/62029 (SENSIT) précité.

D'autres caractéristiques de l'invention sont listées ci-dessous, chacune de ces caractéristiques pouvant être considérée seule ou en combinaison avec les caractéristiques remarquables définies ci-dessus :
- L'antenne qui est installée dans un compartiment peut émettre des fréquences dans une bande de fréquences prédéfinie qui est différente de la bande de fréquences dans laquelle émet l'antenne disposée dans un autre compartiment.
- Les capteurs à ondes acoustiques de surface disposés dans un même compartiment peuvent émettre en retour des fréquences dans une bande de fréquences différentes de celles émise en retour par les capteurs à ondes acoustiques de surface disposés dans un autre compartiment voisin.
- Les capteurs à ondes acoustiques de surface disposés dans un même compartiment peuvent chacun émettre des fréquences dans une bande de fréquences étroite, définie sur un intervalle de 2 MHz.
- Chaque unité électronique de contrôle peut être reliée à une seule antenne qui lui est propre ou reliée à deux antennes, chacune de ces antennes étant installée à l'intérieur d'un compartiment qui lui est dédié.
- Chaque capteur à ondes acoustiques de surface comprend avantageusement une antenne qui lui est propre.
- Chaque capteur à ondes acoustiques de surface est préférentiellement installé sur une pièce qui est mobile mais peut être installé sur une pièce qui est fixe.
- Les capteurs sont préférentiellement agencés dans les différents compartiments de manière à ce que des capteurs situés dans un compartiment ne puissent pas communiquer avec une antenne installée dans un autre compartiment.
- Les unités électroniques de contrôle peuvent être chacune installées à l'extérieur ou à l'intérieur du compartiment.
- Les unités électroniques de contrôle peuvent être reliées entre-elles par des câbles de communication numérique, au moins une desdites unités étant reliée à un matériel de supervision de sorte que toutes lesdites unités puissent communiquer avec ledit matériel.
- Les unités électroniques de contrôle peuvent communiquer avec un matériel de supervision par l'intermédiaire de bus numérique.
- Chaque antenne peut utiliser des fréquences ISM pour communiquer avec les capteurs qui leur sont associés.
- Chaque antenne peut utiliser des fréquences ISM comprises entre 433 MHz et 445 MHz ou des fréquences ISM comprises entre 866 MHz et 890 MHz.
- Chaque antenne peut utiliser des fréquences comprises entre 423 MHz et 435 MHz, ou des fréquences comprises entre 846 MHz et 870 MHz, pour communiquer avec les capteurs qui leur sont associés.
- Chaque antenne utilisée est avantageusement une antenne « quart d'onde » ou PIFA.

Un autre aspect de l'invention concerne un procédé de surveillance de paramètres physiques et/ou analogiques relatifs à des pièces d'un moteur, en interrogeant, par l'intermédiaire d'au moins une antenne un capteur à ondes acoustiques de surface situé sur une desdites pièces. Ce procédé est remarquable en ce qu'il comprend les étapes suivantes :
- compartimenter le moteur de sorte que chaque compartiment comporte plusieurs pièces dont des paramètres physiques et/ou analogiques doivent être surveillés,
- disposer sur chacune de ces pièces à surveiller, un capteur à ondes acoustiques de surface, ces capteurs ayant chacun une fréquence de résonance distincte qui leur est propre,
- installer une antenne à l'intérieur de chaque compartiment,
- relier chacune de ces antennes, seule ou par paire, à une unité électronique de contrôle,
- interroger chaque capteur en émettant simultanément, depuis chaque antenne, plusieurs fréquences distinctes proches des fréquences de résonance des capteurs qui sont situés dans le compartiment moteur de ladite antenne, de manière à communiquer simultanément avec tous ces capteurs.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 précitée illustre un système de surveillance connu de l'art antérieur, et notamment décrit dans le document brevet WO 00/62029 (SENSIT) précité,
- la figure 2 illustre un système de surveillance conforme à l'invention agencé dans un des compartiments du moteur,
- la figure 3 schématise l'agencement d'un système conforme à l'invention dans différents compartiments d'un moteur thermique dont les cylindres sont disposés « en ligne »,
- la figure 4 schématise l'agencement d'un système conforme à l'invention dans différents compartiments d'un moteur thermique dont les cylindres sont disposés en « Vé »,
- la figure 5 schématise un autre agencement d'un système conforme à l'invention dans différents compartiments d'un moteur thermique dont les cylindres sont disposés en « Vé ».

### Modes de réalisation de l'invention.

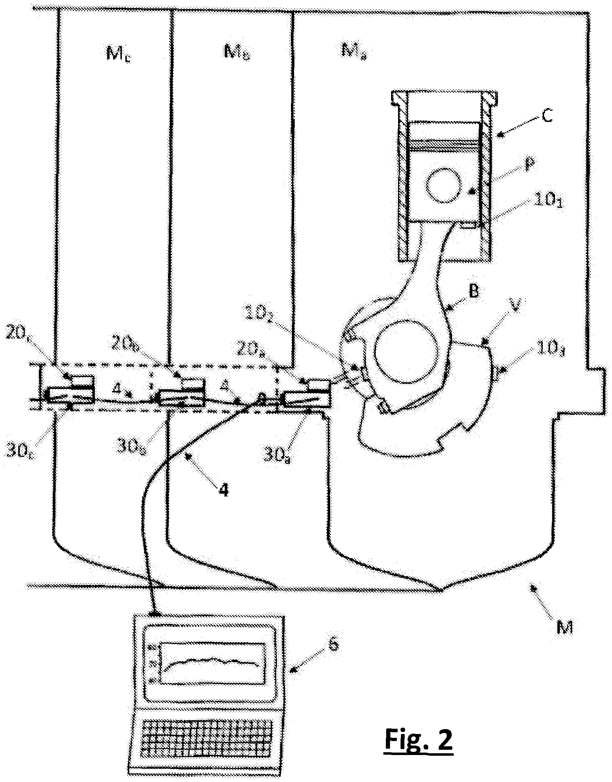

En se rapportant à la figure 2, le système objet de l'invention comporte au moins une unité électronique de contrôle 30a, 30b, 30c. Chacune de ces unités intègre un ou plusieurs processeurs ou microprocesseurs ainsi qu'une zone mémoire dans laquelle sont stockés des programmes informatiques comportant des instructions qui, lorsqu'elles sont exécutées par ledit processeur ou microprocesseur, permettent de réaliser les fonctionnalités et étapes décrites ci-après, et notamment l'acquisition des différentes données émises par les différents capteurs et/ou la transmission d'informations de commande à destination de l'antenne 20ₐ, 20_{b}, 20_{c} à laquelle elle est reliée.

Sur la figure 2, le moteur M comporte plusieurs compartiment Mₐ, M_{b}, M_{c}. L'agencement du système dans le compartiment Mₐ va maintenant être décritL'unité électronique de contrôle 30ₐ est reliée à une seule antenne 20ₐ. Cette dernière peut être directement intégrée dans le boîtier de l'unité 30ₐ ou être déportée, auquel cas la communication est réalisée par l'intermédiaire d'une liaison filaire ou sans fil utilisant un protocole de communication connu de l'Homme du métier (onde radio, wifi, Bluetooth, ...). L'antenne 20ₐ utilisée est par exemple une antenne « quart d'onde » ou PIFA (pour l'acronyme anglais Planar Inverted-F Antenna).

Alors que dans les systèmes de l'art antérieur, chaque antenne est généralement associée à un unique capteur SAW, l'invention propose maintenant de faire communiquer l'antenne 20ₐ avec plusieurs capteurs SAW 10₁, 10₂, 10₃. La figure 2 illustre un exemple de réalisation où trois capteurs SAW 10₁, 10₂, 10₃ sont agencés dans le compartiment Mₐ. Un nombre inférieur (par exemple deux capteurs SAW) ou supérieur de capteurs peut toutefois être envisagé. Les capteurs SAW 10₁, 10₂, 10₃ sont situés sur des pièces du moteur qui sont en général mobiles et dont des paramètres physiques et/ou analogiques doivent être surveillés. Sur la figure 2, les capteurs SAW 10₁, 10₂, 10₃ sont positionnés au niveau d'un cylindre C d'un moteur thermique type diesel. Un premier capteur 10₁ est positionné sur le piston P, un deuxième capteur 10₂ sur la bielle B et un troisième capteur 10₃ sur le vilebrequin V. Chaque capteur SAW 10₁, 10₂, 10₃ comprend une antenne « mobile » - puisque disposée sur une pièce du moteur qui est mobile - qui lui est propre. Ces antennes « mobiles » sont configurées pour recevoir les signaux émis par l'antenne 20ₐ et pour en émettre, en direction de ladite antenne 20ₐ, des signaux de réponse.

Les capteurs SAW 10₁, 10₂, 10₃ ont chacun une fréquence de résonance distincte qui leur est propre. L'unité 30ₐ intègre un émetteur qui envoie simultanément plusieurs signaux électromagnétiques d'interrogation vers l'antenne 20ₐ, chacun desdits signaux ayant une fréquence proche de la fréquence de résonance des capteurs SAW 10₁, 10₂, 10₃. L'antenne 20ₐ est ainsi configurée pour émettre plusieurs boucles de fréquences distinctes (une par capteur SAW). Les signaux reçus puis émis par l'antenne 20ₐ sont transmis aux antennes « mobiles » des capteurs SAW 10₁, 10₂, 10₃, puis convertis en ondes acoustiques de surface qui se propagent à la surface des substrats utilisés par lesdits capteurs SAW. Les propriétés de ces ondes de surface, et notamment leur longueur d'onde, sont modifiées en fonction des paramètres physiques et/ou analogiques (température, pression, contrainte, déformation, position dans l'espace...) des pièces sur lesquelles sont agencés les capteurs SAW 10₁, 10₂, 10₃. Ces paramètres affectent plus particulièrement la fréquence de résonance de chaque capteur SAW 10₁, 10₂, 10₃. Ces derniers réémettent vers l'antenne 20ₐ un signal de réponse à une fréquence de résonance propre qui porte l'information liée aux paramètres à surveiller. En d'autres termes, la réponse des capteurs SAW 10₁, 10₂, 10₃ est une variation en fréquence fonction des paramètres à surveiller, ce qui est plus avantageux qu'un principe basé sur les lignes de retard. Les signaux de réponse reçus par l'antenne 20ₐ sont ensuite transférés vers l'unité 30ₐ qui intègre un récepteur approprié configuré pour extraire les informations recherchées en fonction des fréquences effectivement reçues. L'unité 30ₐ peut ainsi interroger les différents capteurs SAW 10₁, 10₂, 10₃ par l'intermédiaire de la seule antenne 20ₐ.

Selon une caractéristique avantageuse de l'invention, l'antenne 20ₐ utilise des fréquences ISM pour communiquer avec les capteurs 10₁, 10₂, 10₃. Les bandes ISM (pour l'acronyme Industriel, Scientifique et Médical) sont des bandes de fréquences dont l'utilisation pour des applications industrielles, scientifiques, médicales, domestiques ou similaire, est admise sans aucune demande d'autorisation auprès des autorités[]. Pour l'Union européenne, les bandes de fréquences ISM sont définies dans la norme EN 55011 et pour les USA, par la publication FCC Part 18. L'utilisation des bandes de fréquences ISM autorise une distance de lecture pouvant aller jusqu'à 100 cm, suivant le positionnement des capteurs SAW 10₁, 10₂, 10₃ dans le moteur et la géométrie de celui-ci. L'utilisation de fréquences ISM basses, ou proche de ces fréquences, c'est-à-dire comprises entre 433 MHz et 445 MHz, permet de meilleures performances vis-à-vis des problématiques de réflexions, diffractions et d'absorptions des ondes électromagnétiques dans l'environnement métallique du carter du moteur. D'autres types de fréquences convenant à l'Homme du métier pourraient toutefois être utilisés, notamment des fréquences ISM, ou proche de ces fréquences, comprises entre 866 MHz et 890 MHz. Ces fréquences ISM plus élevées permettent de réduire la taille des antennes, de sorte que le système de surveillance objet de l'invention puisse être installé dans des moteurs plus petits.

L'antenne 20ₐ peut également utiliser d'autres fréquences très proches des fréquences ISM. En effet, certains capteurs SAW peuvent avoir des fréquences légèrement situées au-delà des bandes ISM (de 0,5 MHz à 10 MHz par exemple), du fait d'un éventuel effet « cage de Faraday » des compartiments Mₐ, M_{b}, M_{c}. Pour communiquer avec les capteurs 10₁, 10₂, 10₃ qui lui sont associés, l'antenne 20ₐ peut par exemple utiliser des fréquences comprises entre 423 MHz et 435 MHz et qui sont proches des fréquences ISM basses, ou des fréquences comprises 846 MHz et 870 MHz et qui sont proches des fréquences ISM hautes.

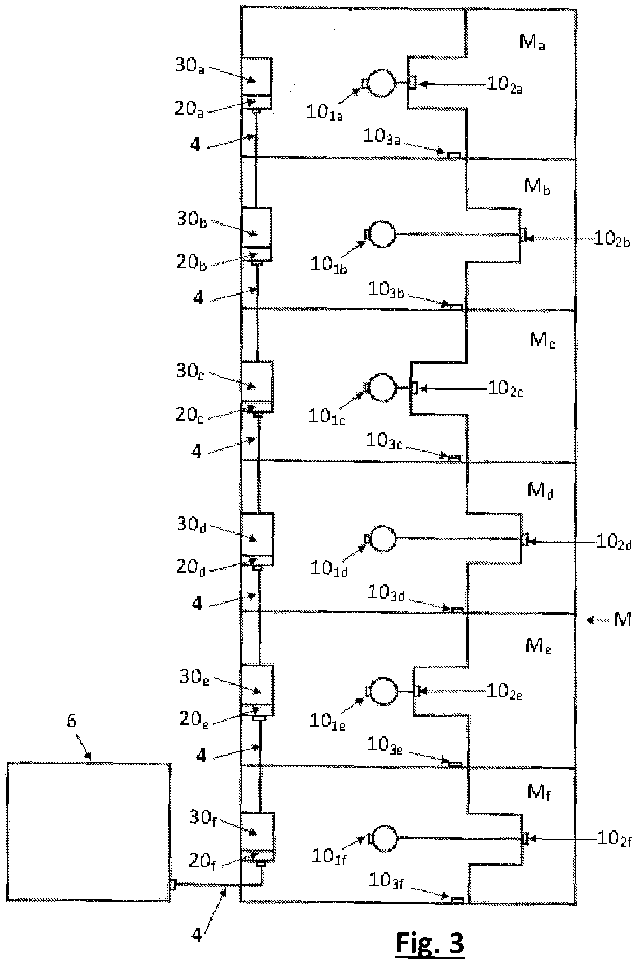

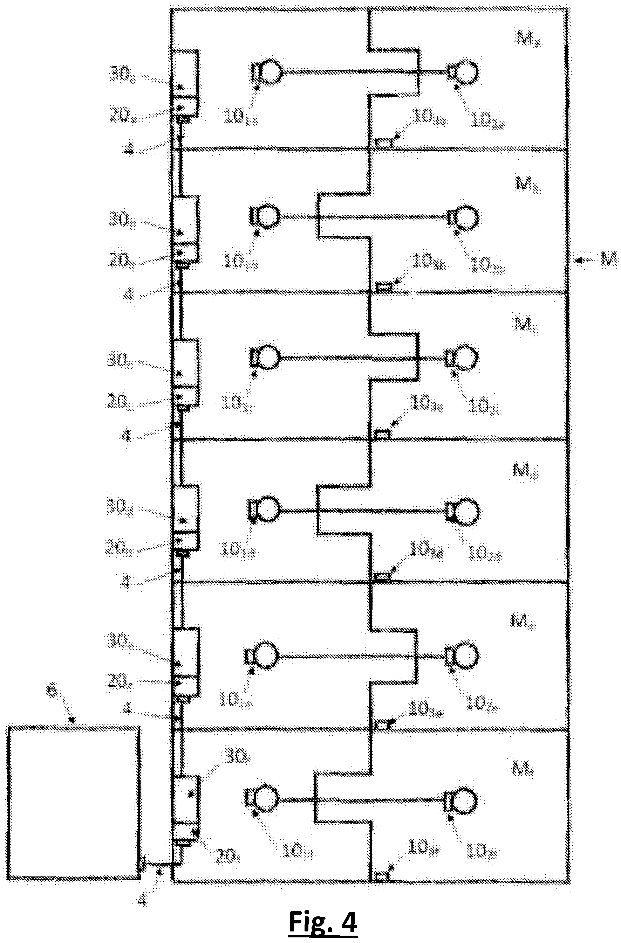

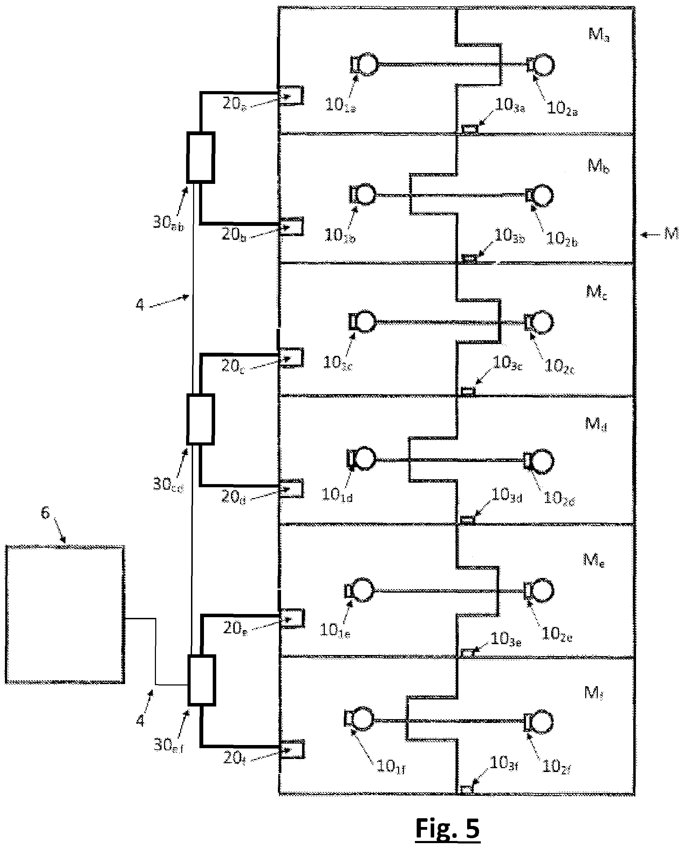

Les figures 3, 4 et 5 illustrent des exemples d'utilisation qui peuvent être faites du système objet de l'invention, en vue de mesurer par exemple la température dans les paliers et manetons de vilebrequins dans un moteur M de type diesel, ou de type Otto s'il s'agit d'un moteur à gaz. Il est entendu que d'autres paramètres tels que : pression, contrainte, déformation ou position dans l'espace peuvent être surveillés. Sur la figure 3, les cylindres du moteur sont disposés « en ligne » tandis que sur les figures 4 et 5, ils sont dans une configuration en « Vé ».

Chaque antenne 20ₐ, ..., 20_{f}, est reliée, seule ou par paire, à une unité électronique de contrôle 30ₐ, ..., 30_{f}. Sur l'exemple illustré des figures 3, 4 et 5, le moteur M est compartimenté. Chaque compartiment Mₐ, ..., M_{f} comporte : une unité électronique de contrôle 30ₐ, ..., 30_{f} chacune associée à une seule antenne 20ₐ, ..., 20_{f}, (figures 3 et 4) ou à deux (figure 5), chacune desquelles antennes communique avec des capteurs SAW 10₁ₐ, 10₂ₐ, 10₃ₐ, ..., 10_{1f}, 10_{2f}, 10_{3f} placés directement à l'intérieur des compartiments, sur les pièces dont des paramètres physiques et/ou analogiques doivent être surveillés. Dans le cas d'une configuration machine dite « en ligne » (figure 3), on dispose par exemple des capteurs SAW de température 10₁ₐ, ..., 10_{1f} sur les pistons, des capteurs SAW de température 10₂ₐ, ..., 10_{2f} sur les bielles et des capteurs SAW de température 10₃ₐ, ..., 10_{3f} sur les paliers du vilebrequin. Dans le cas d'une configuration machine dite « en Vé » (figures 4 et 5), on dispose par exemple des capteurs SAW de température 10₁ₐ, ..., 10_{1f} d'une part et 10₂ₐ, ..., 10_{2f} d'autre part, sur les bielles des paires de cylindres qui se font face, et des capteurs SAW de température 10₃ₐ, ..., 10_{3f} sur les paliers du vilebrequin. Chaque pièce à surveiller est donc pourvue d'un capteur 10₁ₐ, 10₂ₐ, 10₃ₐ, ..., 10_{1f}, 10_{2f}, 10_{3f}. Les figures 3, 4 et 5 illustrent un exemple de réalisation où trois capteurs SAW sont agencés par compartiment moteur. Un nombre inférieur (par exemple deux capteurs SAW) ou supérieur de capteurs peut toutefois être envisagé.

Les capteurs 10₁ₐ, 10₂ₐ, 10₃ₐ, ..., 10_{1f}, 10_{2f}, sont agencés dans les différents compartiments Mₐ, ..., M_{f} de manière à ce que des capteurs situés dans un compartiment ne puissent pas communiquer avec une antenne reliée à une unité électronique de contrôle disposée dans un autre compartiment, et plus spécifiquement dans un compartiment voisin. En pratique, ces capteurs 10₁ₐ, 10₂ₐ, 10₃ₐ, ..., 10_{1f}, 10_{2f}, sont agencés dans les différents compartiments Mₐ, ..., M_{f}, suivant leur fréquence de résonance. Pour optimiser la qualité des mesures, chaque antenne 20ₐ, ..., 20_{f} est installée à l'intérieur d'un compartiment Mₐ, ..., M_{f}. En d'autres termes, une antenne 20ₐ, ..., 20_{f} est installée à l'intérieur de chacun des compartiments Mₐ, ..., M_{f}. Les unités 30ₐ, ..., 30_{f} peuvent être chacune installées à l'extérieur ou à l'intérieur des compartiments Mₐ, ..., M_{f}.

Chaque antenne 20ₐ, ..., 20_{f} interroge préférentiellement uniquement les capteurs SAW 10₁ₐ, 10₂ₐ, 10₃ₐ, ..., 10_{1f}, 10_{2f}, 10_{3f} situés dans son compartiment moteur Mₐ, ..., M_{f}. Chaque antenne20ₐ, ..., 20_{f} reste inactive vis à vis du ou des compartiments voisins du fait de fréquences différentes de celles utilisées dans son propre compartiment. Il n'y a donc pas de risque d'interférence avec les autres antennes installées dans les autres compartiments et notamment les compartiments immédiatement voisins. Plus particulièrement, dans l'exemple illustré sur les figures 3 et 4, chaque unité 30ₐ, ..., 30_{f} est reliée à une seule antenne 20ₐ, ..., 20_{f} qui lui est propre. Chaque unité (par exemple 30_{c}) communique simultanément, par l'intermédiaire de son antenne (par exemple 20_{c}), avec tous les capteurs (par exemple 10_{1c}, 10_{2c}, 10_{3c}) qui sont situés dans son compartiment moteur (par exemple M_{c}).

Dans l'exemple illustré sur la figure 5, chaque unité 30_{ab}, 30_{cd}, 30_{ef} est reliée à deux antennes 20ₐ-20_{b}, 20_{c}-20_{d}, 20ₑ-20_{f}, chacune de ces antennes étant installée à l'intérieur d'un compartiment Mₐ, ..., M_{f} qui lui est dédié. Chaque unité (par exemple 30_{ab}) communique simultanément, par l'intermédiaire de la paire d'antennes à laquelle elle est connectée (par exemple 20ₐ-20_{b}), avec tous les capteurs (par exemple 10₁ₐ, 10₂ₐ, 10₃ₐ et 10_{1b}, 10_{2b}, 10_{3b}) qui sont situés dans les compartiments moteurs dans lesquelles sont intégrées lesdites antennes (par exemple Mₐ et M_{b}).

Pour éviter toute interférence nuisible entre les signaux émis par les différentes antennes 20ₐ, ..., 20_{f} dans le moteur M, une bande passante spéciale est allouée à chacune d'elles ce qui leur permet, par exemple, d'émettre trois boucles de fréquences distinctes à l'intérieur d'un même compartiment Mₐ, ..., M_{f} équipé de trois capteurs SAW 10₁ₐ, 10₂ₐ, 10₃ₐ, ..., 10_{1f}, 10_{2f}, 10_{3f}. Plus particulièrement, en se rapportant à l'exemple illustré sur les figures 3 et 4, l'antenne, par exemple 20ₐ, qui est reliée à l'unité 30ₐ disposée dans le compartiment Mₐ, émet des fréquences dans une bande de fréquences prédéfinie (par exemple 433 MHz à 439 MHz) qui est différente de la bande de fréquences (par exemple 439 MHz à 445 MHz) dans laquelle émet l'antenne 20_{b} reliée à l'unité 30_{b} disposée dans un autre compartiment M_{b}. L'unité 30ₐ n'est ainsi pas capable de communiquer avec les capteurs 10_{1b}, 10_{2b}, 10_{3b} qui sont situés dans le compartiment voisin M_{b}.

Dans l'exemple de réalisation de la figure 5, les antennes, par exemple 20ₐ et 20_{b}, qui sont reliées par paire à l'unité 30_{ab}, et qui sont disposées respectivement dans le compartiment Mₐ et dans le compartiment M_{b}, émettent chacune des fréquences dans une bande de fréquences prédéfinie. L'unité 30_{ab} commande ces antennes de sorte que la bande de fréquence dans laquelle émet l'antenne 20ₐ soit différente de la bande de fréquences dans laquelle émet l'antenne 20_{b}. L'unité 30_{ab} est ainsi capable de communiquer avec les capteurs 10₁ₐ, 10₂ₐ, 10₃ₐ d'une part, et 10_{1b}, 10_{2b}, 10_{3b} d'autre part qui sont situés respectivement dans les compartiments Mₐ et M_{b}. L'unité 30_{ab} n'est toutefois pas capable de communiquer avec les capteurs 10_{1c}, 10_{2c}, 10_{3c} qui sont situés dans le compartiment M_{c}.

Préférentiellement, les antennes 20ₐ, ..., 20_{f} communiquent avec « n » capteur SAW par compartiment, grâce à « 2xn » fréquences distinctes préétablies.

Les unités 30ₐ, ..., 30_{f}, 30_{ab},... 30_{ef}, sont avantageusement reliées entre-elles par des câbles de communication numérique 4. Et au moins une de ces unités (par exemple 30_{f} ou 30_{ef}) est reliée à un matériel de supervision 6 de sorte que toutes lesdites unités puissent communiquer avec ce matériel. Le matériel de supervision 6 est par exemple un ordinateur sur lequel toutes les informations reçues par les différentes unités 30ₐ, ..., 30_{f}, 30_{ab},... 30_{ef}, sont visualisées et/ou traitées et/ou analysées. Les unités 30ₐ, ..., 30_{f}, 30_{ab},... 30_{ef}, peuvent également communiquer avec le matériel de supervision par l'intermédiaire de bus numériques qui fonctionnement grâce à des protocoles de communication tels que CANopen, SAE J1939, Modbus, etc. Puisque d'une part le système objet de l'invention comprend une seule antenne par compartiment et que d'autre part, les unités électroniques de contrôle sont reliées entre elles et au matériel de supervision par un câble de communication numérique ou un bus numérique, ledit système réduit les contraintes liées au câblage en optimisant l'espace qui lui est consacré, à la fois à l'intérieur et à l'extérieur du moteur.

Les capteurs SAW 10₁ₐ, 10₂ₐ, 10₃ₐ, ..., 10_{1f}, 10_{2f}, 10_{3f}, disposés dans un même compartiment peuvent émettre des fréquences dans une bande de fréquences différentes de celles émise par les capteurs à ondes acoustiques de surface disposés dans un autre compartiment voisin. On évite ainsi toute interférence nuisible entre les signaux émis en retour par des capteurs SAW de compartiments immédiatement voisins, et donc physiquement proches. Pour ce faire, une bande passante spécifique peut être allouée à chacun des capteurs SAW 10₁ₐ, 10₂ₐ, 10₃ₐ, ..., 10_{1f}, 10_{2f}, 10_{3f}, ce qui leur permet, par exemple, d'émettre en retour vers chacune des antennes 20ₐ,...,20_{f} trois bandes étroites distinctes à l'intérieur d'un même compartiment Mₐ,....,M_{f}, équipé de trois capteurs SAW. Pour optimiser l'énergie nécessaire au fonctionnement de l'installation, la bande passante allouée à chacun des capteurs SAW est préférentiellement étroite, par exemple définie sur un intervalle (ou incrément) de 2 MHz. Plus particulièrement, en se rapportant à l'exemple illustré sur les figures 3 et 4, les capteurs 10₁ₐ, 10₂ₐ, 10₃ₐ qui communiquent avec l'antenne 20ₐ reliée à l'unité 30ₐ, et qui sont disposés dans le compartiment Mₐ, émettent en retour des fréquences dans des bandes de fréquences prédéfinies, respectivement par exemple 433 MHz à 435 MHz, 435 MHz à 437 MHz, et 437 MHz à 439 MHz. Ces bandes de fréquences sont différentes des bandes de fréquences (par exemple 439 MHz à 441 MHz, 441 MHz à 443 MHz, et 443 MHz à 445 MHz) dans lesquelles émettent en retour les capteurs 10_{1b}, 10_{2b}, 10_{3b} vers l'antenne 20_{b} reliée à l'unité 30_{b}, et disposés dans le compartiment voisin M_{b}. L'unité 30ₐ n'est ainsi pas perturbée par les capteurs 10_{1b}, 10_{2b}, 10_{3b} qui sont situés dans le compartiment M_{b}. Dans cette configuration, il n'est plus nécessaire qu'une antenne 20ₐ, ..., 20_{f} qui est installée dans un compartiment Mₐ, ..., M_{f}, émette des fréquences dans une bande de fréquences prédéfinie qui est différente de la bande de fréquences dans laquelle émet l'antenne disposée dans un autre compartiment. En effet, toutes les antennes 20ₐ, ..., 20_{f} peuvent chacune émettre simultanément plusieurs fréquences distinctes couvrant toute les fréquences de résonance de l'ensemble des capteurs 10₁ₐ, 10₂ₐ, 10₃ₐ, ..., 10_{1f}, 10_{2f}, y compris, mais pas seulement, les fréquences proches des fréquences de résonance des capteurs qui sont situés dans le compartiment qui leur est dédié. Toutes les antennes 20ₐ, ..., 20_{f} sont ainsi identiques et dimensionnées pour pouvoir émettre le même spectre de fréquences en large bande. Ce sont les unités 30ₐ, ..., 30_{f} qui sont configurées pour lire les différentes fréquences en retour des capteurs.

Les exemples de réalisation de l'invention présentés ci-dessus ont été choisis eu égard à leur caractère concret. Il ne serait cependant pas possible de répertorier de manière exhaustive tous les modes de réalisation que recouvre cette invention. En particulier, toute étape ou moyen décrit peut être remplacé par une étape ou un moyen équivalent, sans sortir du cadre de la présente invention.

## Revendications

1. Système de surveillance de paramètres physiques et/ou analogiques relatifs à des pièces d'un moteur, ledit système comprenant au moins une unité électronique de contrôle (30ₐ) configurée pour interroger, par l'intermédiaire d'au moins une antenne (20ₐ), un capteur à ondes acoustiques de surface situé sur une desdites pièces,
**se caractérisant par le fait que :**
- le moteur (M) est compartimenté, chaque compartiment (Mₐ, ..., M_{f}) comportant plusieurs pièces mobiles ou fixe dont des paramètres physiques et/ou analogiques doivent être surveillés,
- chacune de ces pièces à surveiller est pourvue d'un capteur (10₁ₐ, 10₂ₐ, 10₃ₐ, ..., 10_{1f}, 10_{2f}, 10_{3f}) à ondes acoustiques de surface, ces capteurs ayant chacun une fréquence de résonance distincte qui leur est propre,
- une antenne (20ₐ, ..., 20_{f}) est installée à l'intérieur de chacun des compartiments (Mₐ, ..., M_{f}), chacune de ces antennes étant reliée, seule ou par paire, à une unité électronique de contrôle (30ₐ, ..., 30_{f}, 30_{ab},... 30_{ef}),
- chaque antenne (20ₐ, ..., 20_{f}) est commandée par l'unité électronique de contrôle (30ₐ, ..., 30_{f}, 30_{ab},... 30_{ef}) à laquelle elle est reliée, pour émettre simultanément plusieurs fréquences distinctes proches des fréquences de résonance des capteurs (10₁ₐ, 10₂ₐ, 10₃ₐ, ..., 10_{1f}, 10_{2f}, 10_{3f}) qui sont situés dans le compartiment moteur (Mₐ, ..., M_{f}) de ladite antenne, de manière à communiquer simultanément avec tous ces capteurs (10₁ₐ, 10₂ₐ, 10₃ₐ, ..., 10_{1f}, 10_{2f}, 10_{3f}).

2. Système selon la revendication 1, dans lequel l'antenne (20ₐ, ..., 20_{f}) qui est installée dans un compartiment (Mₐ, ..., M_{f}), émet des fréquences dans une bande de fréquences prédéfinie qui est différente de la bande de fréquences dans laquelle émet l'antenne disposée dans un autre compartiment.

3. Système selon l'une des revendications précédentes, dans lequel les capteurs (10₁ₐ, 10₂ₐ, 10₃ₐ, ..., 10_{1f}, 10_{2f}, 10_{3f}) à ondes acoustiques de surface disposés dans un même compartiment (Mₐ, ..., M_{f}), émettent en retour des fréquences dans une bande de fréquences différentes de celles émise en retour par les capteurs à ondes acoustiques de surface disposés dans un autre compartiment voisin.

4. Système selon l'une des revendications précédentes, dans lequel les capteurs (10₁ₐ, 10₂ₐ, 10₃ₐ, ..., 10_{1f}, 10_{2f}, 10_{3f}) à ondes acoustiques de surface disposés dans un même compartiment (Mₐ, ..., M_{f}), émettent chacun des fréquences dans une bande de fréquences étroite, définie sur un intervalle de 2 MHz.

5. Système selon l'une des revendications 1 à 4, dans lequel chaque unité électronique de contrôle (30ₐ, ..., 30_{f}) est reliée à une seule antenne (20ₐ, ..., 20f) qui lui est propre.

6. Système selon l'une des revendications 1 à 4, dans lequel chaque unité électronique de contrôle (30_{ab},... 30_{ef}) est reliée à deux antennes (20ₐ, ..., 20_{f}), chacune de ces antennes étant installée à l'intérieur d'un compartiment (Mₐ, ..., M_{f}) qui lui est dédié.

7. Système selon l'une des revendications précédentes, dans lequel chaque capteur (10₁ₐ, 10₂ₐ, 10₃ₐ, ..., 10_{1f}, 10_{2f}, 10_{3f}) à ondes acoustiques de surface comprend une antenne qui lui est propre.

8. Système selon l'une des revendications précédentes, dans lequel chaque capteur (10₁ₐ, 10₂ₐ, 10₃ₐ, ..., 10_{1f}, 10_{2f}, 10_{3f}) à ondes acoustiques de surface est installé sur une pièce qui est mobile.

9. Système selon la revendication 1, dans lequel les capteurs (10₁ₐ, 10₂ₐ, 10₃ₐ, ..., 10_{1f}, 10_{2f}) sont agencés dans les différents compartiments (Mₐ, ..., M_{f}) de manière à ce que des capteurs situés dans un compartiment ne puissent pas communiquer avec une antenne (20ₐ, ..., 20_{f}) installée dans un autre compartiment.

10. Système selon l'une des revendications 1 à 9, dans lequel les unités électroniques de contrôle (30ₐ, ..., 30_{f}, 30_{ab},... 30_{ef}) sont chacune installées à l'extérieur ou à l'intérieur du compartiment (Mₐ, ..., M_{f}).

11. Système selon l'une des revendications 1 à 9, dans lequel les unités électroniques de contrôle (30ₐ, ..., 30_{f}, 30_{ab},... 30_{ef}) sont reliées entre-elles par des câbles de communication numérique (4), au moins une desdites unités étant reliée à un matériel de supervision (6) de sorte que toutes lesdites unités puissent communiquer avec ledit matériel.

12. Système selon l'une des revendications 1 à 9, dans lequel les unités électroniques de contrôle (30ₐ, ..., 30_{f}, 30_{ab},... 30_{ef}) communiquent avec un matériel de supervision (6) par l'intermédiaire de bus numérique.

13. Système selon l'une des revendications précédentes, dans lequel chaque antenne (20ₐ, ..., 20_{f}) utilise des fréquences ISM pour communiquer avec les capteurs (10₁ₐ, 10₂ₐ, 10₃ₐ, ..., 10_{1f}, 10_{2f}) qui leur sont associés.

14. Système selon la revendication 13 dans lequel chaque antenne (20ₐ, ..., 20_{f}) utilise des fréquences ISM comprises entre 433 MHz et 445 MHz.

15. Système selon la revendication 13, dans lequel chaque antenne (20ₐ, ..., 20_{f}) utilise des fréquences ISM comprises entre 866 MHz et 890 MHz.

16. Système selon l'une des revendications 1 à 12, dans lequel chaque antenne (20ₐ, ..., 20_{f}) utilise des fréquences comprises entre 423 MHz et 435 MHz, pour communiquer avec les capteurs (10₁ₐ, 10₂ₐ, 10₃ₐ, ..., 10_{1f}, 10_{2f}) qui leur sont associés.

17. Système selon l'une des revendications 1 à 12, dans lequel chaque antenne (20ₐ, ..., 20_{f}) utilise des fréquences comprises entre 846 MHz et 870 MHz, pour communiquer avec les capteurs (10₁ₐ, 10₂ₐ, 10₃ₐ, ..., 10_{1f}, 10_{2f}) qui leur sont associés.

18. Système selon l'une des revendications précédentes, dans lequel chaque antenne (20ₐ, ..., 20_{f}) utilisée est une antenne « quart d'onde » ou PIFA.

19. Procédé de surveillance de paramètres physiques et/ou analogiques relatifs à des pièces d'un moteur, en interrogeant, par l'intermédiaire d'au moins une antenne (20ₐ), un capteur à ondes acoustiques de surface situé sur une desdites pièces,
**se caractérisant par le fait qu'**il comprend les étapes suivantes :
- compartimenter le moteur (M) de sorte que chaque compartiment (Mₐ, ..., M_{f}) comporte plusieurs pièces dont des paramètres physiques et/ou analogiques doivent être surveillés,
- disposer sur chacune de ces pièces à surveiller, un capteur (10₁ₐ, 10₂ₐ, 10₃ₐ, ..., 10_{1f}, 10_{2f}, 10_{3f}) à ondes acoustiques de surface, ces capteurs ayant chacun une fréquence de résonance distincte qui leur est propre,
- installer une antenne (20ₐ, ..., 20_{f}) à l'intérieur de chaque compartiment (Mₐ, ..., M_{f}),
- relier chacune de ces antennes (20ₐ, ..., 20_{f}), seule ou par paire, à une unité électronique de contrôle (30ₐ, ..., 30f, 30_{ab},... 30_{ef}),
- interroger chaque capteur (10₁ₐ, 10₂ₐ, 10₃ₐ, ..., 10_{1f}, 10_{2f}, 10_{3f}) en émettant simultanément, depuis chaque antenne (20ₐ, ..., 20_{f}), plusieurs fréquences distinctes proches des fréquences de résonance des capteurs (10₁ₐ, 10₂ₐ, 10₃ₐ, ..., 10_{1f}, 10_{2f}, 10_{3f}) qui sont situés dans le compartiment moteur (Mₐ, ..., M_{f}) de ladite antenne, de manière à communiquer simultanément avec tous ces capteurs (10₁ₐ, 10₂ₐ, 10₃ₐ, ..., 10_{1f}, 10_{2f}, 10_{3f}).

## Patentansprüche

1. System zur Überwachung der physikalischen und/oder analogen Parameter, die sich auf Teile eines Motors beziehen, wobei das System mindestens eine elektronische Steuereinheit (30ₐ) umfasst, die ausgelegt ist, mit Hilfe mindestens einer Antenne (20ₐ), einen akustischen Oberflächenwellensensor abzufragen, der auf einem der Teile angeordnet ist,
**dadurch gekennzeichnet, dass**:
- der Motor (M) in Abteile geteilt ist, wobei jedes Abteil (Mₐ, ..., M_{f}) mehrere bewegliche oder feste Teile umfasst, deren physikalische und/oder analoge Parameter überwacht werden müssen,
- jeder dieser zu überwachenden Teile mit einem akustischen Oberflächenwellensensor (10₁ₐ, 10₂ₐ, 10₃ₐ, ..., 10_{1f}, 10_{2f}, 10_{3f}) versehen ist, wobei diese Sensoren jeweils eine bestimmte Resonanzfrequenz aufweisen, die diesen eigen ist,
- eine Antenne (20ₐ, ..., 20_{f}) im Inneren jedes der Abteile (Mₐ, ..., M_{f}) installiert ist, wobei jede dieser Antennen, allein oder paarweise, mit einer elektronischen Steuereinheit (30ₐ, ..., 30_{f}, 30_{ab}, ..., 30_{ef}) verbunden ist,
- jede Antenne (20ₐ, ..., 20_{f}) von der elektronischen Steuereinheit (30ₐ, ..., 30_{f}, 30_{ab}, ..., 30_{ef}), mit der diese verbunden ist, gesteuert wird, um gleichzeitig mehrere bestimmte Frequenzen nahe bei Resonanzfrequenzen der Sensoren (10₁ₐ, 10₂ₐ, 10₃ₐ, ..., 10_{1f}, 10_{2f}, 10_{3f}) zu emittieren, die in dem Motorabteil (Mₐ, ..., M_{f}) der Antenne derart installiert sind, dass diese gleichzeitig mit allen diesen Sensoren (10₁ₐ, 10₂ₐ, 10₃ₐ, ..., 10_{1f}, 10_{2f}, 10_{3f}) kommuniziert.

2. System nach Anspruch 1, wobei die Antenne (20ₐ, ..., 20_{f}), die in einem Abteil (Mₐ, ..., M_{f}) installiert ist, Frequenzen in einem vordefinierten Frequenzband emittiert, das von dem Frequenzband verschieden ist, in dem die Antenne emittiert, die in einem anderen Abteil angeordnet ist.

3. System nach einem der vorhergehenden Ansprüche, wobei die akustischen Oberflächenwellensensoren (10₁ₐ, 10₂ₐ, 10₃ₐ, ..., 10_{1f}, 10_{2f}, 10_{3f}), die in demselben Abteil (Mₐ, ..., M_{f}) angeordnet sind, Frequenzen in einem Frequenzband zurückemittieren, die von jenen verschieden sind, welche von den akustischen Oberflächenwellensensoren zurückemittiert werden, die in einem anderen benachbarten Abteil angeordnet sind.

4. System nach einem der vorhergehenden Ansprüche, wobei die akustischen Oberflächenwellensensoren (10₁ₐ, 10₂ₐ, 10₃ₐ, ..., 10_{1f}, 10_{2f}, 10_{3f}), die in demselben Abteil (Mₐ, ..., M_{f}) angeordnet sind, jeweils Frequenzen in einem schmalen Frequenzband emittieren, das in einem Intervall von 2 MHz definiert ist.

5. System nach einem der Ansprüche 1 bis 4, wobei jede elektronische Steuereinheit (30ₐ, ..., 30_{f}) mit einer einzigen Antenne (20ₐ, ..., 20_{f}) verbunden ist, die dieser eigen ist.

6. System nach einem der Ansprüche 1 bis 4, wobei jede elektronische Steuereinheit (30_{ab}, ..., 30_{ef}) mit zwei Antennen (20ₐ, ..., 20_{f}) verbunden ist, wobei jede dieser Antennen im Inneren eines Abteils (Mₐ, ..., M_{f}) installiert ist, das für diese dediziert ist.

7. System nach einem der vorhergehenden Ansprüche, wobei jeder akustische Oberflächenwellensensor (10₁ₐ, 10₂ₐ, 10₃ₐ, ..., 10_{1f}, 10_{2f}, 10_{3f}) eine Antenne umfasst, die diesem eigen ist.

8. System nach einem der vorhergehenden Ansprüche, wobei jeder akustische Oberflächenwellensensor (10₁ₐ, 10₂ₐ, 10₃ₐ, ..., 10_{1f}, 10_{2f}, 10_{3f}) auf einem Teil installiert ist, der beweglich ist.

9. System nach Anspruch 1, wobei die Sensoren (10₁ₐ, 10₂ₐ, 10₃ₐ, ..., 10_{1f}, 10_{2f}) in den verschiedenen Abteilen (Mₐ, ..., M_{f}) derart angeordnet sind, dass die in einem Abteil befindlichen Sensoren nicht mit einer Antenne (20ₐ, ..., 20_{f}) kommunizieren können, die in einem anderen Abteil installiert ist.

10. System nach einem der Ansprüche 1 bis 9, wobei die elektronischen Steuereinheiten (30ₐ, ..., 30_{f}, 30_{ab}, ..., 30_{ef}) jeweils außerhalb oder innerhalb des Abteils (Mₐ, ..., M_{f}) installiert sind.

11. System nach einem der Ansprüche 1 bis 9, wobei die elektronischen Steuereinheiten (30ₐ, ..., 30_{f}, 30_{ab}, ..., 30_{ef}) durch numerische Kommunikationskabel (4) miteinander verbunden sind, wobei mindestens eine der Einheiten mit einem Überwachungsmaterial (6) derart verbunden ist, dass alle Einheiten mit dem Material kommunizieren können.

12. System nach einem der Ansprüche 1 bis 9, wobei die elektronischen Steuereinheiten (30ₐ, ..., 30_{f}, 30_{ab}, ..., 30_{ef}) mit einem Überwachungsmaterial (6) mit Hilfe eines numerischen Busses kommunizieren.

13. System nach einem der vorhergehenden Ansprüche, wobei jede Antenne (20ₐ, ..., 20_{f}) ISM-Frequenzen verwendet, um mit den Sensoren (10₁ₐ, 10₂ₐ, 10₃ₐ, ..., 10_{1f}, 10_{2f}) zu kommunizieren, die diesen zugeordnet sind.

14. System nach Anspruch 13, wobei jede Antenne (20ₐ, ..., 20_{f}) ISM-Frequenzen verwendet, die zwischen 433 MHz und 445 MHz liegen.

15. System nach Anspruch 13, wobei jede Antenne (20ₐ, ..., 20_{f}) ISM-Frequenzen verwendet, die zwischen 866 MHz und 890 MHz liegen.

16. System nach einem der Ansprüche 1 bis 12, wobei jede Antenne (20ₐ, ..., 20_{f}) Frequenzen verwendet, die zwischen 423 MHz und 435 MHz liegen, um mit den Sensoren (10₁ₐ, 10₂ₐ, 10₃ₐ, ..., 10_{1f}, 10_{2f}) zu kommunizieren, die diesen zugeordnet sind.

17. System nach einem der Ansprüche 1 bis 12, wobei jede Antenne (20ₐ, ..., 20_{f}) Frequenzen verwendet, die zwischen 846 MHz und 870 MHz liegen, um mit den Sensoren (10₁ₐ, 10₂ₐ, 10₃ₐ, ..., 10_{1f}, 10_{2f}) zu kommunizieren, die diesen zugeordnet sind.

18. System nach einem der vorhergehenden Ansprüche, wobei jede verwendete Antenne (20ₐ, ..., 20_{f}) eine "Viertelwellen"-Antenne oder PIFA ist.

19. Verfahren zur Überwachung der physikalischen und/oder analogen Parameter, die sich auf Teile eines Motors beziehen, indem, mit Hilfe mindestens einer Antenne (20ₐ), ein akustischer Oberflächenwellensensor abgefragt wird, der auf einem der Teile angeordnet ist,
**dadurch gekennzeichnet, dass** dieses die folgenden Schritte umfasst:
- Teilen des Motors (M) in Abteile derart, dass jedes Abteil (Mₐ, ..., M_{f}) mehrere Teile umfasst, deren physikalische und/oder analoge Parameter überwacht werden müssen,
- Anordnen, auf jedem dieser zu überwachenden Teile, eines akustischen Oberflächenwellensensors (10₁ₐ, 10₂ₐ, 10₃ₐ, ..., 10_{1f}, 10_{2f}, 10_{3f}), wobei diese Sensoren jeweils eine bestimmte Resonanzfrequenz aufweisen, die diesen eigen ist,
- Installieren einer Antenne (20ₐ, ..., 20_{f}) im Inneren jedes Abteils (Mₐ, ..., M_{f}),
- Verbinden jeder dieser Antennen (20ₐ, ..., 20_{f}), allein oder paarweise, mit einer elektronischen Steuereinheit (30ₐ, ..., 30_{f}, 30_{ab}, ..., 30_{ef}),
- Abfragen jedes Sensors (10₁ₐ, 10₂ₐ, 10₃ₐ, ..., 10_{1f}, 10_{2f}, 10_{3f}), indem gleichzeitig, von jeder Antenne (20ₐ, ..., 20_{f}), mehrere bestimmte Frequenzen nahe bei Resonanzfrequenzen der Sensoren (10₁ₐ, 10₂ₐ, 10₃ₐ, ..., 10_{1f}, 10_{2f}, 10_{3f}) emittiert werden, die in dem Motorabteil (Mₐ, ..., M_{f}) der Antenne derart installiert sind, dass diese gleichzeitig mit allen diesen Sensoren (10₁ₐ, 10₂ₐ, 10₃ₐ, ..., 10_{1f}, 10_{2f}, 10_{3f}) kommuniziert.

## Claims

1. System for monitoring physical and/or analogue parameters relating to parts of an engine, said system comprising at least one electronic control unit (30ₐ) configured to interrogate, via at least one antenna (20ₐ), a surface acoustic wave sensor situated on one of said parts,
**being characterized in that:**
- the engine (M) is divided up into compartments, each compartment (Mₐ, ..., M_{f}) comprising a number of moving or fixed parts of which the physical and/or analogue parameters have to be monitored,
- each of these parts to be monitored is provided with a surface acoustic wave sensor (10₁ₐ, 10₂ₐ, 10₃ₐ, ..., 10_{1f}, 10_{2f}, 10_{3f}), these sensors each having a distinct resonance frequency which is specific to them,
- an antenna (20ₐ, ..., 20_{f}) is installed inside each of the compartments (Mₐ, ..., M_{f}), each of these antennas being linked, alone or in pairs, to an electronic control unit (30ₐ, ..., 30_{f}, 30_{ab}, ..., 30_{ef}),
- each antenna (20ₐ, ..., 20_{f}) is controlled by the electronic control unit (30ₐ, ..., 30_{f}, 30_{ab}, ..., 30_{ef}) to which it is linked to simultaneously emit a number of distinct frequencies close to the resonance frequencies of the sensors (10₁ₐ, 10₂ₐ, 10₃ₐ, ..., 10_{1f}, 10_{2f}, 10_{3f}) which are situated in the engine compartment (Mₐ, ..., M_{f}) of said antenna, so as to simultaneously communication with all these sensors (10₁ₐ, 10₂ₐ, 10₃ₐ, ..., 10_{1f}, 10_{2f}, 10_{3f}).

2. System according to Claim 1, in which the antenna (20ₐ, ..., 20_{f}) which is installed in one compartment (Mₐ, ..., M_{f}) emits frequencies in a predefined frequency band which is different from the frequency band in which the antenna arranged in another compartment emits.

3. System according to one of the preceding claims, in which the surface acoustic wave sensors (10₁ₐ, 10₂ₐ, 10₃ₐ, ..., 10_{1f}, 10_{2f}, 10_{3f}) arranged in a same compartment (Mₐ, ..., M_{f}), emit in return frequencies in a band of frequencies different from those emitted in return by the surface acoustic wave sensors arranged in another neighbouring compartment.

4. System according to one of the preceding claims, in which the surface acoustic wave sensors (10₁ₐ, 10₂ₐ, 10₃ₐ, ..., 10_{1f}, 10_{2f}, 10_{3f}) arranged in a same compartment (Mₐ, ..., M_{f}) each emit frequencies in a narrow frequency band, defined over an interval of 2MHz.

5. System according to one of Claims 1 to 4, in which each electronic control unit (30ₐ, ..., 30_{f}) is linked to a single antenna (20ₐ, ..., 20_{f}) which is specific to it.

6. System according to one of Claims 1 to 4, in which each electronic control unit (30_{ab}, ..., 30_{ef}) is linked to two antennas (20ₐ, ..., 20ₜ), each of these antennas being installed inside a compartment (Mₐ, ..., M_{f}) which is dedicated to it.

7. System according to one of the preceding claims, in which each surface acoustic wave sensor (10₁ₐ, 10₂ₐ, 10₃ₐ, ..., 10_{1f}, 10_{2f}, 10_{3f}) comprises an antenna which is specific to it.

8. System according to one of the preceding claims, in which each surface acoustic wave sensor (10₁ₐ, 10₂ₐ, 10₃ₐ, ..., 10_{1f}, 10_{2f}, 10_{3f}) is installed on a moving part.

9. System according to Claim 1, in which the sensors ( 10₁ₐ, 10₂ₐ, 10₃ₐ, ..., 10_{1f}, 10_{2f}) are arranged in the different compartments (Mₐ, ..., M_{f}) in such a way that the sensors situated in one compartment cannot communicate with an antenna (20ₐ, ..., 20ₜ) installed in another compartment.

10. System according to one of Claims 1 to 9, in which the electronic control units (30ₐ, ..., 30_{f}, 30_{ab}, ..., 30_{ef}) are each installed outside or inside the compartment (Mₐ, ..., M_{f}).

11. System according to one of Claims 1 to 9, in which the electronic control units (30ₐ, ..., 30_{f}, 30_{ab}, ..., 30_{ef}) are linked together by digital communication cables (4), at least one of said units being linked to supervisory hardware (6) so that all of said units can communicate with said hardware.

12. System according to one of Claims 1 to 9, in which the electronic control units (30ₐ, ..., 30_{f}, 30_{ab}, ..., 30_{ef}) communicate with supervisory hardware (6) via a digital bus.

13. System according to one of the preceding claims, in which each antenna (20ₐ, ..., 20_{f}) uses ISM frequencies to communicate with the sensors (10₁ₐ, 10₂ₐ, 10₃ₐ, ..., 10_{1f}, 10_{2f}) which are associated therewith.

14. System according to Claim 13, in which each antenna (20ₐ, ..., 20_{f}) uses ISM frequencies lying between 433 MHz and 445 MHz.

15. System according to Claim 13, in which each antenna (20ₐ, ..., 20_{f}) uses ISM frequencies lying between 866 MHz and 890 MHz.

16. System according to one of Claims 1 to 12, in which each antenna (20ₐ, ..., 20_{f}) uses frequencies lying between 423 MHz and 435 MHz, to communicate with the sensors (10₁ₐ, 10₂ₐ, 10₃ₐ, ..., 10_{1f}, 10_{2f}) which are associated therewith.

17. System according to one of Claims 1 to 12, in which each antenna (20ₐ, ..., 20_{f}) uses frequencies lying between 846 MHz and 870 MHz, to communicate with the sensors (10₁ₐ, 10₂ₐ, 10₃ₐ, ..., 10_{1f}, 10_{2f}) which are associated therewith.

18. System according to one of the preceding claims, in which each antenna (20ₐ, ..., 20_{f}) used is a "quarter wave" or PIFA antenna.

19. Method for monitoring physical and/or analogue parameters relating to parts of an engine, by interrogating, via at least one antenna (20ₐ), a surface acoustic wave sensor situated on one of said parts, **being characterized in that** it comprises the following steps:
- dividing up the engine (M) into compartments such that each compartment (Mₐ, ..., M_{f}) comprises a number of parts whose physical and/or analogue parameters must be monitored,
- arranging on each of these parts to be monitored, a surface acoustic wave sensor (10₁ₐ, 10₂ₐ, 10₃ₐ, ..., 10_{1f}, 10_{2f}, 10_{3f}), these sensors each having a distinct resonance frequency which is specific to them,
- installing an antenna (20ₐ, ..., 20_{f}) inside each compartment (Mₐ, ..., M_{f}),
- linking each of these antennas (20ₐ, ..., 20_{f}), alone or in pairs, to an electronic control unit (30ₐ, ..., 30_{f}, 30_{ab}, ..., 30_{ef}),
- interrogating each sensor (10₁ₐ, 10₂ₐ, 10₃ₐ, ..., 10_{1f}, 10_{2f}, 10_{3f}) by simultaneously emitting, from each antenna (20ₐ, ..., 20_{f}), a number of distinct frequencies close to the resonance frequencies of the sensors (10₁ₐ, 10₂ₐ, 10₃ₐ, ..., 10_{1f}, 10_{2f}, 10_{3f}) which are situated in the engine compartment (Mₐ, ..., M_{f}) of said antenna, so as to simultaneously communicate with all these sensors (10₁ₐ, 10₂ₐ, 10₃ₐ, ..., 10_{1f}, 10_{2f}, 10_{3f}).
